# DEMANDE DE BREVET EUROPEEN

(11) **EP 2 816 241 A1**
(43) Date de publication de la demande: **24.12.2014**
(21) Numéro de dépôt: 14172765.1
(22) Date de dépôt: 17.06.2014
(51) Int. Cl.: F16B 7/04

(54) **Dispositif de connexion pour assembler deux profilés**

(30) Priorité: 21.06.2013 FR 1355906
(71) Demandeur: AGAM Group Ltd, Elkridge, MD 21075 (US)
(72) Inventeur: Gamain, Claude, 92500 Rueil Malmaison (FR)
(74) Mandataire: CAPRI

(57) **Abrégé**

Dispositif de connexion pour assembler un premier profilé récepteur (P1) présentant une cavité interne (C) et un second profilé d'accrochage (P2) présentant au moins une gorge (G) ayant une ouverture rétrécie (O), le dispositif de connexion étant destiné à être reçu fixement dans la cavité interne (C) du profilé récepteur (P1), le dispositif de connexion comprenant une cage (1) formant une paire de mâchoires (10) destinées à venir en prise dans la gorge (G), caractérisé en ce qu'il comprend :
- des moyens de sollicitation élastique (5) pour solliciter un organe d'écartement (2) entre les mâchoires (10) pour les écarter de manière à venir en prise avec la gorge (G) à travers l'ouverture rétrécie (O),
- un levier rotatif (3) autour d'un axe de rotation (4), le levier rotatif (3) comprenant un bras de levier (31) apte à être saisi manuellement et une tête de poussée (33) qui vient en prise avec l'organe d'écartement (2) pour le déplacer hors des mâchoires à l'encontre de la force exercée par les moyens de sollicitation élastique (5) sur l'organe d'écartement (2).

## Description

La présente invention concerne un dispositif de connexion pour assembler un premier profilé récepteur présentant une cavité interne et un second profilé d'accrochage présentant au moins une gorge ayant une ouverture rétrécie. Le dispositif de connexion est destiné à être reçu fixement dans la cavité interne du profilé récepteur et comprend une cage formant une paire de mâchoires destinées à venir en prise dans la gorge du profilé d'accrochage à travers son ouverture rétrécie. Le dispositif comprend également un organe d'écartement pour écarter les mâchoires et des moyens d'actionnement pour réaliser un déplacement relatif entre l'organe d'écartement et les mâchoires. Ces moyens d'actionnement comprennent un levier rotatif autour d'un axe de rotation. Les domaines d'application privilégiés de la présente invention sont ceux du matériel d'exposition dit matériel d'installation générale et accessoirement du mobilier d'exposition et/ou d'entreprise, domaines dans lesquels il est nécessaire de pouvoir monter et démonter rapidement des structures et/ou des meubles. Bien entendu, la présente invention peut également être utilisée dans tous les autres domaines dans lesquels deux profilés doivent être assemblés, de préférence perpendiculairement.

Dans l'art antérieur, on connait déjà le document FR-2 971 026 dans lequel les moyens d'actionnement comprennent une biellette reliée au levier rotatif par un deuxième axe de rotation et à un élément de butée par un troisième axe de rotation, les trois axes de rotation étant parallèles, la distance entre le premier axe et le troisième axe étant variable en actionnant le levier. De plus, l'abaissement du levier a pour effet de comprimer un ressort qui sollicite l'organe d'écartement entre les mâchoires. A l'inverse, le relèvement du levier a pour effet de détendre le ressort. Par ailleurs, la mise en oeuvre d'une biellette permet de démultiplier la force du levier, mais implique bien évidemment une pièce supplémentaire, qui a coût de fabrication et de montage. Enfin, le montage de ce dispositif de connexion nécessite la réalisation d'une profonde échancrure de réception dans le profil de récepteur, qui nuit à l'esthétique globale.

On connait également le document FR-2 721 377 qui décrit un dispositif de connexion du même type général. Ce dispositif comprend une épingle mobile formant une paire de mâchoires. Pour écarter les mâchoires de l'épingle, il est prévu des moyens d'écartement fixes, et pour déplacer l'épingle, il est prévu des moyens de came comprenant un levier rotatif autour d'un axe auquel est associé un disque excentrique. Ce dispositif comprend en outre une cage à l'intérieur de laquelle sont reçus l'épingle, les moyens d'écartement ainsi que les moyens de came. Ainsi, l'épingle se déplace dans la cage sous l'action du disque excentrique actionné par le levier rotatif, et ses mâchoires sont écartées par les moyens d'écartement qui sont fixes dans la cage. Par conséquent, ce dispositif de connexion nécessite la mise en oeuvre d'une cage fixe et d'une épingle mobile. De plus, les moyens de came comprennent, outre le levier, une broche mobile qui sollicite l'épingle par l'intermédiaire d'un ressort. L'actionnement du levier est de ce fait difficile et nécessite une force importante.

La présente invention a pour but de fournir dispositif de connexion dont le principe d'actionnement est différent. Un autre but est de garantir la prise des mâchoires dans la gorge du profilé d'accrochage indépendamment de l'abaissement complet du levier rotatif. Elle a également pour but de réduire le nombre de pièces. Encore un autre but est faciliter le montage du dispositif de connexion dans un profilé récepteur en veillant tout particulièrement à l'aspect esthétique.

Pour atteindre ces buts, la présente invention propose que le dispositif de connexion comprenne :
- des moyens de sollicitation élastique pour solliciter un organe d'écartement entre les mâchoires pour les écarter de manière à venir en prise avec la gorge à travers l'ouverture rétrécie,
- un levier rotatif autour d'un axe de rotation, le levier rotatif comprenant un bras de levier apte à être saisi manuellement et une tête de poussée qui vient en prise avec l'organe d'écartement pour le déplacer hors des mâchoires à l'encontre de la force exercée par les moyens de sollicitation élastique sur l'organe d'écartement.

Ainsi, contrairement aux dispositifs de connexion de l'art antérieur, celui de la présente invention fonctionne en quelque sorte sur un mode d'actionnement inversé, en ce sens que le levier rotatif ne sert pas à forcer l'organe d'écartement entre les mâchoires pour les écarter, mais au contraire à retirer ou désengager l'organe d'écartement d'entre les mâchoires pour permettre leur rapprochement afin de les insérer ou extraire de la gorge du profilé d'accrochage.

Avantageusement, la tête de poussée est hors de contact de l'organe d'écartement lorsque les mâchoires sont en prise dans la gorge, de sorte que l'organe d'écartement est uniquement sollicité entre les mâchoires par les moyens de sollicitation élastique. Cela démontre clairement que le levier est totalement inopérant pour pousser l'organe d'écartement entre les mâchoires en prise dans la gorge.

Selon un mode de réalisation avantageux, la tête de poussée comprend une zone de contact apte à venir en prise à la fois avec l'organe d'écartement lorsque le bras de levier est éloigné de la cage et avec une branche de la cage lorsque le bras de levier est rabattu sur la cage, la branche de la cage étant avantageusement souple de manière à être déformée par la zone de contact de la tête de poussée. Ainsi, lorsque les mâchoires sont en prise avec une gorge, la zone de contact est en appui contre la branche souple de la cage et est avantageusement hors de contact de l'organe d'écartement. La déformation élastique de la branche souple permet de maintenir le levier en position avec le bras de levier plaqué sur la cage.

Selon une forme de réalisation pratique, l'organe d'écartement, avantageusement réalisée de manière monobloc, comprend une partie avant formant une lame ou bride d'écartement qui vient en prise entre les mâchoires, une partie arrière en prise avec moyens de sollicitation élastique et une partie centrale formant une fenêtre dans laquelle se déplace la tête de poussée pour venir en prise avec la partie arrière et/ou la cage. L'organe d'écartement peut par exemple se présenter sous la forme d'une pièce monobloc en matière plastique injectée/moulée.

Selon un aspect fort intéressant, la cage peut comprendre une gorge de palier pour les extrémités de l'axe de rotation du levier rotatif. De cette manière, les deux extrémités de l'axe du levier rotatif peuvent simplement être déposées dans le palier de réception qui va ensuite être complété ou couvert par le profilé récepteur.

Selon une autre caractéristique de l'invention, l'organe d'écartement peut comprendre une bride d'écartement qui vient en prise avec des surfaces convergentes des mâchoires pour les écarter de manière progressive jusqu'à ce qu'elles viennent en prise serrante avec l'ouverture rétrécie de la gorge du profilé d'accrochage.

Selon un autre aspect avantageux, la cage comprend un logement ouvert pour la réception d'une broche de blocage permettant de fixer le dispositif dans la cavité du profilé récepteur, la broche de blocage traversant avantageusement les deux branches et l'organe d'écartement, la broche de blocage étant avantageusement sollicitée par un ressort pour faire saillie hors d'une des branches. La broche de blocage peut prendre différentes formes, comme par exemple une simple tige, ou encore une vis ou un boulon, ou même pion monté sur ressort. La broche de blocage traverse pénètre dans un alésage du profilé récepteur qui peut être formé sur le dessus, le dessous ou les côtés du profilé.

La présente invention définit également un profilé récepteur présentant une cavité interne contenant un dispositif de connexion tel que défini ci-dessus, le profilé récepteur comprenant une découpe présentant un bord annulaire continu dans lequel est disposé le bras de levier. Avantageusement, la découpe est globalement allongée, mais forme une extension d'extrémité présentant une largeur réduite définissant deux bords de palier opposés sous lesquels des extrémités de l'axe de rotation du levier rotatif sont engagées.

La présente invention définit aussi un procédé de montage d'un dispositif de connexion tel que défini ci-dessus dans un profilé récepteur tel que défini ci-dessus, le procédé comprenant les étapes successives suivantes :
a- retirer le levier rotatif et son axe de rotation de la cage,
b- engager la cage dans la cavité du profilé récepteur,
c- mettre en place le levier rotatif avec son axe de rotation dans la cage à travers la découpe,
d- déplacer dispositif de connexion assemblé dans la cavité pour engager des extrémités de l'axe de rotation sous des bords de la découpe, et
e- bloquer la cage dans la cavité du profilé récepteur.

En pratique, la cage avec son organe d'écartement est insérée par coulissement dans l'extrémité ouverte de la cavité et enfoncée jusqu'à ce que le palier de réception soit disposé au niveau de la plus grande largeur de la découpe pour pouvoir mettre en place le l'axe de rotation monté sur le levier dans le palier de réception. Ensuite, le dispositif de connexion assemblé est déplacé par coulissement dans la cavité jusqu'à ce que les extrémités de l'axe de rotation du levier rotatif s'engagent sous les bords de palier définis par l'extension d'extrémité de la découpe qui présente une largeur réduite. Il suffit alors de verrouiller le dispositif de connexion par tous moyens dans la cavité du profilé récepteur. Ce procédé de montage présente l'avantage que la découpe du profilé récepteur est « fermée », et non pas ouverte sur l'extrémité du profilé récepteur sous la forme d'une profonde échancrure. Avec cette découpe « fermée », comparée à une échancrure profonde classique, le profilé récepteur est bien moins affaibli. Ce procédé de montage par insertion de l'axe de rotation dans un palier de la cage qui est compléter par le profilé récepteur est une caractéristique qui peut être protégé en soi, indépendamment de l'action du levier à l'encontre du ressort pour ouvrir le dispositif de connexion.

Un principe de la présente invention est d'utiliser le levier rotatif, non pas pour assurer le serrage des mâchoires dans la gorge, mais pour permettre le rapprochement des mâchoires, à l'inverse du fonctionnement conventionnel. Un autre principe de l'invention est de déposer l'axe de rotation du levier dans un palier ouvert de la cage qui est ensuite recouvert par le profilé récepteur. Ces deux principes sont liés par le concept commun selon lequel le levier n'intervient pas pour pousser l'organe d'écartement entre les mâchoires, de sorte qu'il est possible de mettre le levier (avec son axe) en place sur la cage sans être gêné ou empêché par l'action des moyens de sollicitation élastique. Et ce concept est à la base du dispositif de connexion et de son procédé de montage dans un profilé récepteur.

L'invention sera maintenant plus amplement décrite en référence aux dessins joints, donnant à titre d'exemple non limitatif, un mode de réalisation de la présente invention, avec une variante.

Sur les figures :
La figure 1 est une vue en coupe transversale longitudinale à travers le dispositif de connexion de la figure 1 engagé dans la cavité d'un profilé récepteur, avec le levier rotatif abaissé,
La figure 2 est une vue de dessus et en transparence du dispositif de connexion de la figure 1 engagé dans la cavité d'un profilé récepteur, avec le levier rotatif abaissé,
La figure 3 est une vue similaire à celle de la figure 1 avec le levier rotatif relevé, et
La figure 4 est une vue similaire aux figures 1 et 3 avec le levier rotatif abaissé, et avec les mâchoires en prise avec un profilé d'accrochage,
La figure 5 est une vue en coupe transversale à travers la cage du dispositif de connexion des figures précédentes,
La figure 6 est une vue de dessus de l'organe d'écartement du dispositif de connexion des figures 1 à 4,
La figure 7 est une vue en coupe transversale longitudinale à travers une variante du dispositif de connexion, et
La figure 8 est une vue de dessus de l'organe d'écartement du dispositif de connexion de la figure 7.

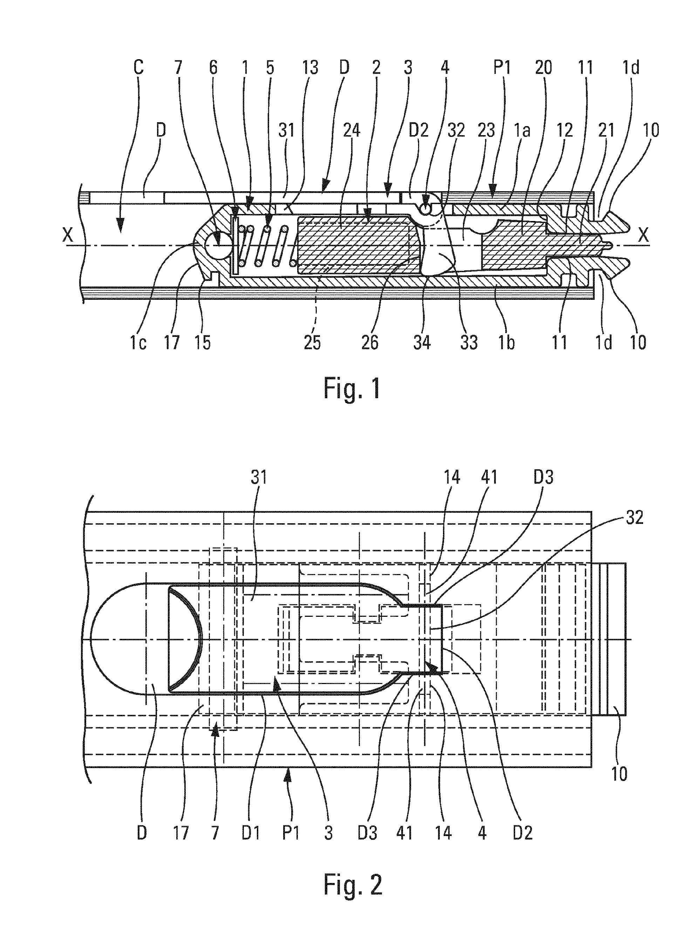

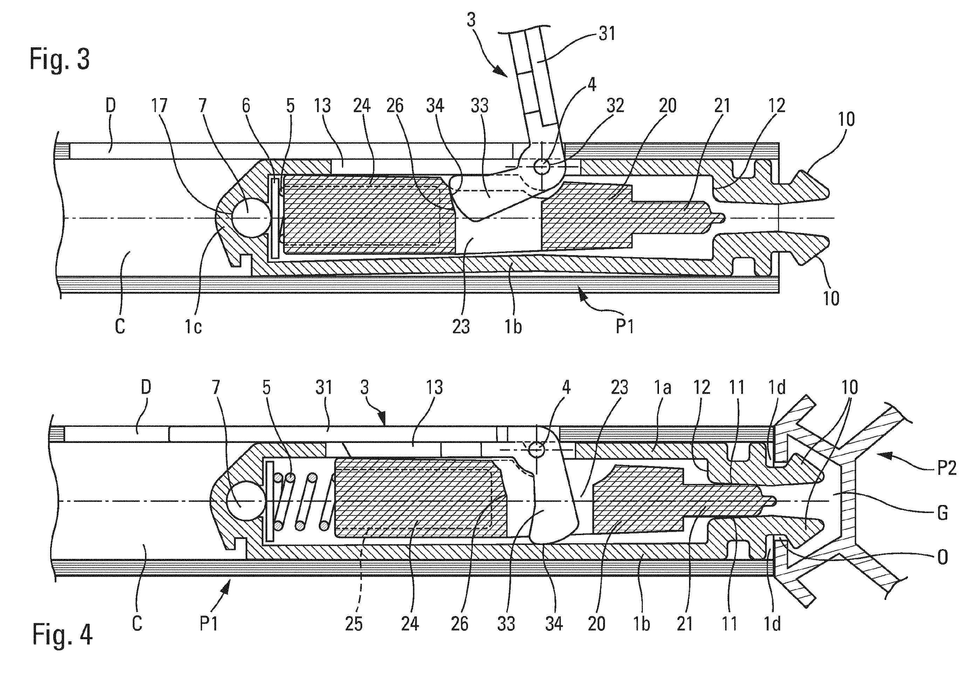

On se référera indifféremment à l'ensemble des figures 1 à 6 pour décrire en détail la structure et le fonctionnement d'un dispositif de connexion réalisé selon une forme de réalisation non limitative de l'invention. Le dispositif de connexion est destiné à être monté fixement dans une cavité C d'un profilé récepteur P1, comme on peut le voir sur les figures 1 à 4. Des mâchoires 10 du dispositif de connexion font saillie hors de la cavité C afin de pouvoir venir en prise avec un profilé d'accrochage P2 formant une gorge G ayant une ouverture rétrécie O. On peut voir sur la figure 4 que les deux mâchoires 10 sont disposées à l'intérieur de la gorge G en prise avec l'ouverture rétrécie O. De cette manière, le profilé d'accrochage P2 est solidement assemblé au profilé récepteur P1. La configuration triangulaire des extrémités extérieures des mâchoires 10 contribue même à exercer une traction sur le profilé P2 pour le plaquer contre le profilé P1. De cette manière, on élimine tout jeu possible entre les deux profilés P1 et P2. Ainsi assemblé, le profilé P2 s'étend perpendiculairement au profilé P1. On peut également dire que l'extrémité du profilé P1 est connectée sur la longueur du profilé P2. Les profilés P1 et P2 peuvent être réalisés avec n'importe quelle technique et n'importe quel matériau, mais de préférence ils sont réalisés par extrusion d'aluminium.

Selon une caractéristique avantageuse de l'invention, le profilé récepteur P1 est formé avec une découpe D réalisée par exemple par poinçonnage sur sa face supérieure. Cette découpe D est « fermée » sur elle-même, de sorte qu'elle définit un bord annulaire continu D1 refermé sur lui-même. Ce bord D1 ne communique pas avec l'extrémité du profilé P1. En se référant à la figure 2, on peut voir que le bord D1 de la découpe D présente une forme générale allongée ou oblongue dans la direction du profilé. Cependant, on peut remarquer que l'extrémité de droite de la découpe D forme une extension d'extrémité D2 présentant une largeur inférieure à celle du reste de la découpe. L'extension D2 définit ainsi deux bords de palier opposés D3 dont la fonction sera expliquée ci-après.

Selon une autre caractéristique de l'invention, le profilé récepteur P1 est réalisé avec un ou deux trous de blocage apte(s) à recevoir une broche de blocage pour fixer de manière stable le dispositif de connexion dans la cavité C du profilé récepteur P1.

Le dispositif de connexion de l'invention comprend plusieurs éléments constitutifs, à savoir une cage 1, un organe d'écartement 2, un levier rotatif 3, un ou plusieurs ressort(s) 5 et une broche de blocage 7. Optionnellement, le dispositif de connexion peut comprendre une petite plaquette 6 entre le ressort 6 et la broche 7.

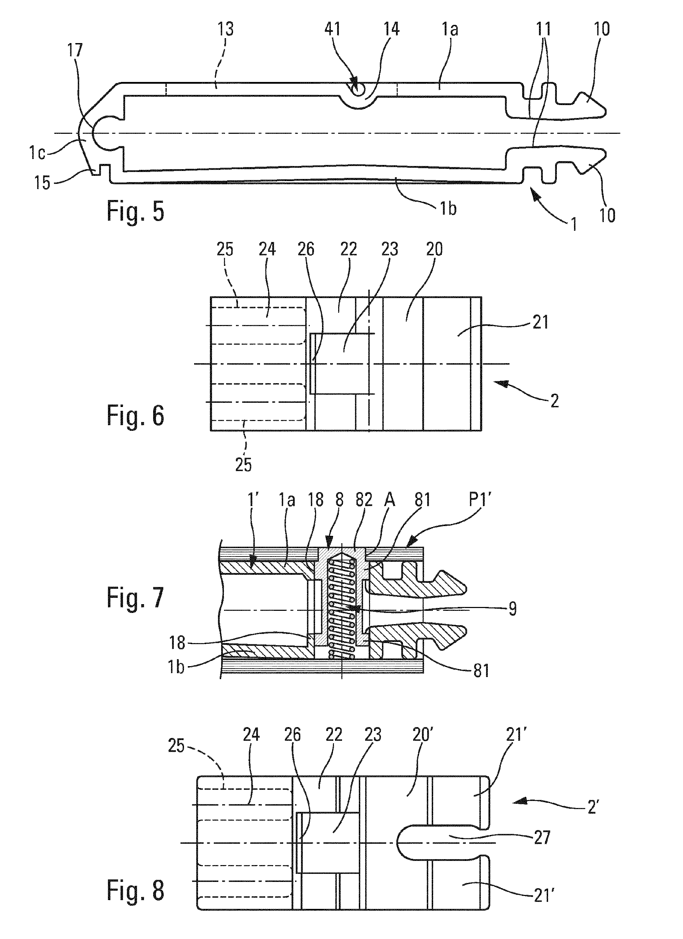

La cage 1 est avantageusement réalisée par extrusion d'aluminium. La cage 1 présente par conséquent une section uniforme et sa largeur peut être de l'ordre de 27 mm par exemple. La cage 1 se présente sous la forme d'une épingle comprenant deux branches sensiblement parallèles 1a et 1 b reliées ensemble par une de leurs extrémités par une section de jonction 1 c. Cette section 1c forme avantageusement un logement ouvert 17 destiné à recevoir la broche de blocage 7. Cette broche fait saillie axialement hors du logement 17 de part et d'autre de la cage, comme on peut le voir sur la figure 2. Ainsi, les extrémités de la broche 7 servent de tétons de blocage à l'intérieur de la cavité C du profilé récepteur. A cet effet, le profilé récepteur forme deux trous de passage pour la broche de blocage 7 qui est engagée dans la cage 1 une fois la cage insérée dans la cavité C du profilé récepteur P1. Cette broche de blocage 7 peut assurer à elle seule la fixation du dispositif de connexion D à l'intérieur de la cavité C du profilé récepteur P1. La section 1c forme également un crochet 15 qui peut servir à l'accrochage d'un accessoire, comme par exemple un élément de couvercle pour obturer partiellement la découpe D pratiquée dans le profil récepteur P1. A l'extrémité opposée à la section de jonction 1 c, les deux branches 1a et 1 b forment les mâchoires 10 du dispositif de connexion. Les mâchoires 10 forment chacune une rainure de réception 1d dans laquelle est reçu un bord de l'ouverture rétrécie O, comme représenté sur la figure 4. Il faut également remarquer que les deux mâchoires 10 s'étendent l'une vers l'autre aux extrémités des branches 1a et 1 b en formant un épaulement intérieur 12 qui réduit la distance entre les deux mâchoires 10. Avantageusement, les mâchoires 10 forment deux surfaces convergentes 11 qui convergent l'une vers l'autre de manière à réduire encore davantage la distance les séparant. Les deux surfaces convergentes 11 convergent l'une vers l'autre à partir des épaulements 12 vers les extrémités libres des mâchoires 10. On verra ci-après quelle est la fonction de ces surfaces convergentes 11. La branche 1 a forme une grande ouverture 13 pour le passage du levier rotatif 3. De part et d'autre de cette grande ouverture 13, la branche 1a forme un palier de réception ouvert 14 qui peut se présenter sous la forme une gorge rectiligne. La figure 5 est une vue en section verticale à travers la cage 1, mais en-dehors de la grande ouverture 13 de manière à faire apparaître le palier de réception 14. D'autre part, la branche 1 b de la cage 1 présente un galbe au repos, comme on peut le voir sur la figure 3, de sorte qu'elle peut être déformée élastiquement vers l'extérieur (le bas sur les figures) vers la paroi interne de la cavité C. La branche 1 b présente ainsi une configuration et une souplesse qui lui permettent d'être déformée avec une mémoire de forme.

Pour écarter les mâchoires 10 de la cage 1, l'organe d'écartement 2 est déplaçable dans la cage 1 le long d'un axe de déplacement X. L'organe d'écartement 2 est de préférence réalisé de manière monobloc, par exemple par injection/moulage d'une matière plastique appropriée. Toutefois, il peut également être réalisé par assemblage de plusieurs pièces. L'organe d'écartement 2 comprend avantageusement une partie avant 20 formant une lame ou bride d'écartement 21 qui vient en prise entre les mâchoires 10 pour les écarter. L'organe d'écartement 2 comprend également une partie arrière 24 qui forme un, oui de préférence deux, logement borgnes 25 pour la réception de moyens de sollicitation élastique et une paroi de poussée 26 qui est opposée à l'entrée des logements borgnes 25. Entre les parties avant 20 et arrière 24, l'organe d'écartement 2 forme une partie centrale 22 percée d'une fenêtre 23 dont un bord est défini par la paroi de poussée 26. Un tel organe d'écartement 2 est clairement visible sur la figure 6.

L'organe d'écartement 2 est disposé à l'intérieur de la cage 1 entre ses deux branches 1a et 1b avec sa lame d'écartement 21 dirigée vers ou reçue entre les mâchoires 10. L'organe d'écartement 2 est sollicité élastiquement par des moyens appropriés vers les mâchoires. Ces moyens de sollicitation élastiques peuvent par exemple se présenter sous la forme d'un, ou de préférence, deux ressorts 5 qui sont reçus dans les logements borgnes 25 de l'organe d'écartement. Ces ressorts 5 prennent d'autre part appui sur la section de jonction 1 c de la cage. Avantageusement, les ressorts 5 appuient sur une plaquette 6, qui elle-même prend appui sur la broche de blocage 7 qui est engagée dans le logement ouvert 17 de la cage. Ainsi, les ressorts 5, par l'intermédiaire de la plaquette 6, assure le maintien stable de la broche 7 dans logement 17. Sur la figure 2, on peut voir que les deux bouts de la broche sont engagés dans des trous de blocage correspondant formés dans le profilé récepteur P1, garantissant ainsi le blocage du dispositif de connexion dans la cavité C du profilé P1.

La lame d'écartement 21 est destinée à venir s'insérer entre les deux surfaces convergentes 11 des mâchoires 10. La lame 21 présente de préférence une extrémité libre pointue ou arrondie afin de faciliter son déplacement entre les deux surfaces convergentes 11. On voit sur les différentes figures que la lame d'écartement 21 peut se déplacer dans la cage 1 entre les mâchoires 10 entre deux positions extrêmes correspondant à la figure 1 et à la figure 3. En effet, sur la figure 3, la lame d'écartement 21 n'est même pas en prise avec les surfaces convergentes 11. Son extrémité est à peine engagée entre ces deux surfaces. A l'inverse, sur la figure 1, la lame d'écartement 21 est entièrement engagée entre les mâchoires 10 et les écarte au maximum. En revanche, en se référant à la figure 4, on peut voir que la lame d'écartement 21 n'est pas complètement engagée entre les surfaces convergentes 11, comme cela est le cas sur la figure 1. En effet, la lame 21 ne peut pas s'engager davantage, étant donné que les mâchoires 10 sont en prise avec l'ouverture rétrécie O de la gorge G. La figure 4 correspond à une configuration donnée pour une taille d'ouverture rétrécie O. Avec une ouverture O plus petite, la lame d'écartement 21 serait engagée moins profondément à l'intérieur entre les surfaces convergentes 11 des mâchoires 10.

Le levier rotatif 3 comprend un bras de levier 31 qui peut être saisi et manipulé manuellement à l'aide d'un ou deux doigt(s), une tête de poussée 33 qui est reliée fixement au bras de levier 3 et qui s'étend sensiblement perpendiculairement à ce bras de levier 3, et un palier d'axe 32 disposé sensiblement à la jonction entre le bras de levier 3 et la tête de poussée 33. Ce palier 32 est avantageusement ouvert sur toute sa longueur, de manière à recevoir un axe de rotation 4. En variante, le palier 32 pourrait être fermé de sorte que l'axe de rotation 4 doit être inséré dans le palier par une de ses extrémités. Toutefois, le mode de réalisation dans lequel le palier 32 est ouvert sur toute sa longueur présente l'avantage de pouvoir mettre en place l'axe de rotation 4 de manière latérale en poussant sur l'axe jusqu'à ce qu'il s'encliquète à l'intérieur du palier ouvert 32. L'axe de rotation 4 comprend deux extrémités d'axe opposées 41 qui font saillie de part et d'autre hors du palier 32. Ces extrémités d'axe 41 sont reçues dans la gorge de palier 14 formées dans la branche 1a de la cage, comme cela est illustré sur les figures 2 et 5. D'autre part, le profilé récepteur P1 s'étend juste au-dessus de la gorge de palier 14 avec ses deux bords de palier opposés D3 formés par l'extension d'extrémité D2 de la découpe D pratiquée dans le profilé P1. On peut ainsi dire que le profilé P1 vient compléter la gorge de palier 14 de la cage pour former ensemble un palier complet dans lequel les extrémités d'axe 41 de l'axe de rotation 4 sont reçues. Entre ces deux extrémités d'axe 41, l'axe de rotation 4 est reçu dans le palier 32 formé par le levier rotatif 3.

La tête de poussée 33 forme une zone de contact 34 qui est située environ au niveau de son extrémité libre, à l'opposé du palier 32. Cette zone de contact 34 peut venir en contact appuyé avec la paroi de poussée 26, comme représenté sur la figure 3. Le bras de levier 31 s'étend alors sensiblement verticalement, alors que la tête de poussée 33 est plutôt horizontale. Dans cette position, l'organe d'écartement 2 a été déplacé au maximum vers la section de liaison 1c en comprimant au maximum les ressorts 5. La lame d'écartement 21 est complètement retirée d'entre les mâchoires 10, de sorte qu'il est possible de les rapprocher l'une de l'autre, notamment pour les insérer ou pour les extraire de la gorge G d'un profilé d'accrochage P2. On peut noter que le levier rotatif 3 a pour fonction de déplacer l'organe d'écartement 2 à l'encontre des ressorts 5. La position représentée sur la figure 3 est une position stable, étant donné que la zone de contact 34 vient appuyer contre une partie inclinée de la paroi de poussée 26. Le profilé récepteur P1 peut alors être manipulé avec son dispositif de connexion pour le rapporter dans la gorge G d'un profilé d'accrochage P2. Une fois les deux mâchoires 10 engagées dans la gorge G à travers l'ouverture rétrécie O par rapprochement élastique des mâchoires, le bras de levier 31 peut être rabattu sur la cage de manière à s'inscrire parfaitement à l'intérieur de la découpe D du profilé P1. Le bras de levier 31 peut occuper l'intégralité de la découpe D, ou de préférence, un trou de préhension peut être préservé pour permettre à l'utilisateur de passer le doigt à l'intérieur de la cavité pour saisir le bras de levier 31 par-dessous. Pour des raisons esthétiques, il est possible de prévoir un accessoire sous la forme d'un couvercle élastique maintenu au niveau du crochet 15 pour compléter et obturer la découpe D au niveau où l'utilisateur doit passer le doigt. Quoiqu'il en soit, lorsque le bras de levier 31 est complètement rabattu, comme représenté sur la figure 4, la tête de poussée 33 est disposée sensiblement verticalement et sa zone de contact 34 vient appuyer fortement contre la branche inférieure 1 b qui est ainsi déformée en aplatissant son galbe à l'état de repos. En effet, on peut remarquer sur la figure 3 que la branche inférieure 1b présente un léger galbe, alors que sur la figure 4, ce galbe a disparu, du fait que la branche 1 b est déformée par la tête de poussée 33 qui appuie au niveau de sa zone de contact 34. La déformation de la branche inférieure 1 b peut même contribuer à stabiliser encore davantage le dispositif de connexion à l'intérieur du profilé récepteur P1. Ce que l'on peut remarquer est que la tête de poussée 33 est disposée à l'intérieur de la fenêtre 23, mais hors de contact de l'organe d'écartement 2. Cela signifie que la lame d'écartement 21 est sollicitée entre les mâchoires 10 uniquement par la sollicitation des ressorts 5, la tête de poussée 33 étant totalement inopérante. Comme susmentionné, la profondeur de pénétration de la lame d'écartement 21 entre les mâchoires 10 dépend de la taille de l'ouverture rétrécie O de la gorge G du profilé d'accrochage P2. Quoiqu'il en soit, on peut dire que dans la très grande majorité des cas, l'engagement de la lame d'écartement 21 entre les mâchoires 10 provient uniquement de la sollicitation des ressorts 5, et aucunement de la tête de poussée 33.

Sur la figure 1, les mâchoires 10 ne sont pas en prises avec une gorge d'un profil d'accrochage, de sorte qu'elles peuvent s'écarter au maximum. De ce fait, les ressorts 5 poussent l'organe d'écartement 2 au maximum entre les mâchoires 10. La partie avant 20 de l'organe d'écartement peut même venir en butée contre les épaulements 12 formés juste en amont des mâchoires 10. Le levier rotatif 3 est dans la même position que sur la figure 4, c'est-à-dire avec son bras de levier 31 rabattu dans la découpe D et la tête de poussée 33 disposée verticalement avec sa zone de contact 34 en prise appuyée déformante avec la branche inférieure 1 b. La tête de poussée 33 peut venir éventuellement en contact léger avec la paroi de poussée 26, ou en rester écartée. De toute façon, la position rabattue du levier rotatif est garantie par le contact appuyé de la zone de contact 34 avec la banche galbée 1 b. On peut remarquer que le levier rotatif 3 ne subit aucune sollicitation ou contrainte de la part de l'organe d'écartement 2.

Cette absence de contrainte sur le levier rotatif 3 dans la configuration de la figure 1 induit un avantage important au niveau du procédé de montage du dispositif de connexion à l'intérieur de la cavité C du profilé récepteur P1. En effet, grâce à cette absence de contrainte ou de sollicitation sur le levier rotatif 3, il est possible de le mettre en place sur la cage 1 à travers la découpe D, alors que la cage 1 avec son organe d'écartement 2 et ses ressorts 5 sont déjà en place à l'intérieur de la cavité. Il suffit pour cela d'enfoncer profondément la cage 2 à l'intérieur de la cavité C de manière à disposer les gorges de palier 14 de la cage 1 au niveau de la partie la plus large de la découpe D. Il est alors aisé de mettre en place le levier rotatif 3 en déposant les extrémités d'axe 41 de l'axe de rotation 4 dans les gorges d'axes 14 de la cage. Ensuite, il suffit de faire coulisser le dispositif de connexion à l'intérieur de la cavité pour amener les gorges d'axe 14 avec leurs extrémités d'axe 41 au niveau de l'extension d'extrémité D2 de la découpe D de sorte que les bords de palier D3 recouvrent les gorges d'axe 14 et les extrémités d'axe 41. Ceci est représenté très clairement sur la figure 2. Enfin, il suffit d'engager la broche de blocage 7 à travers les trous de passage du profilé P1 et le logement ouvert 17 pour bloquer définitivement le dispositif de connexion de l'invention à l'intérieur du profilé récepteur P1. Il faut rappeler que ce procédé de montage particulièrement avantageux n'est possible que du fait que le levier rotatif 3 peut être mis en place sans subir aucune contrainte ou sollicitation de la part de l'organe d'écartement 2 qui est uniquement soumis à la sollicitation des ressorts 5.

On se référera maintenant aux figures 7 et 8 pour décrire une variante de réalisation pour la broche de blocage 7. On peut par exemple réaliser une broche de blocage 8 qui s'étend, non pas horizontalement comme la broche de blocage 7, mais verticalement à travers les deux branches 1a et 1b et l'organe d'écartement 2'. Plus précisément, on peut prévoir dans chaque branche 1a, 1b un alésage 18 et dans l'organe d'écartement 2' une échancrure 27, qui peut par exemple déboucher au niveau de la lame d'écartement 21' qui est ainsi divisée en deux parties. Le reste de l'organe d'écartement 2' peut être identique à celui de la figure 6. Le profilé récepteur P1' est réalisé avec un alésage de blocage A qui est disposé entre la découpe D et le bord d'extrémité du profilé. La broche de blocage 8 peut se présenter sous la forme d'un picot 81 qui s'étend à travers les alésages 18 et l'échancrure 27 et qui comprend une tête de blocage et d'actionnement 82 qui est engagée dans l'alésage A du profilé récepteur P1. Le picot 81 est sollicité par un ressort 9 qui prend appui sur la paroi inférieure interne du profilé récepteur P1'. Avec la broche de blocage 8, il est possible de bloquer le dispositif de connexion dans le profilé récepteur P1' sans aucune manipulation particulière, étant donné que le téton 82 vient automatiquement se loger dans l'alésage A sous l'action du ressort 9, dès lors que le téton 82 est parfaitement aligné avec l'alésage A.

A la place de cette broche de blocage 8 on peut également prévoir une simple vis ou un boulon, qui ne présente cependant pas les mêmes avantages.

Grâce à l'invention, on dispose d'un dispositif de connexion dont l'organe d'écartement est uniquement sollicité entre les mâchoires par des moyens de sollicitation élastiques, laissant ainsi le levier rotatif hors de contrainte, ce qui permet un montage avantageux du dispositif de connexion dans un profilé récepteur.

## Revendications

1. Dispositif de connexion pour assembler un premier profilé récepteur (P1 ; P1') présentant une cavité interne (C) et un second profilé d'accrochage (P2) présentant au moins une gorge (G) ayant une ouverture rétrécie (O), le dispositif de connexion étant destiné à être reçu fixement dans la cavité interne (C) du profilé récepteur (P1, P1'), le dispositif de connexion comprenant une cage (1) ayant deux branches (1 a, 1 b) formant une paire de mâchoires (10) destinées à venir en prise dans la gorge (G) du profilé d'accrochage (P2) à travers son ouverture rétrécie (O), **caractérisé en ce qu'**il comprend :
- des moyens de sollicitation élastique (5) pour solliciter un organe d'écartement (2 ; 2') entre les mâchoires (10) pour les écarter de manière à venir en prise avec la gorge (G) à travers l'ouverture rétrécie (O),
- un levier rotatif (3) autour d'un axe de rotation (4), le levier rotatif (3) comprenant un bras de levier (31) apte à être saisi manuellement et une tête de poussée (33) qui vient en prise avec l'organe d'écartement (2 ; 2') pour le déplacer hors des mâchoires à l'encontre de la force exercée par les moyens de sollicitation élastique (5) sur l'organe d'écartement (2 ; 2').

2. Dispositif de connexion selon la revendication 1, dans lequel la tête de poussée (33) est hors de contact de l'organe d'écartement (2 ; 2') lorsque les mâchoires (10) sont en prise dans la gorge (G), de sorte que l'organe d'écartement (2 ; 2') est uniquement sollicité entre les mâchoires (10) par les moyens de sollicitation élastique (5).

3. Dispositif de connexion selon la revendication 1 ou 2, dans lequel la tête de poussée (33) comprend une zone de contact (34) apte à venir en prise à la fois avec l'organe d'écartement (2 ; 2') lorsque le bras de levier (31) est éloigné de la cage (1) et avec une branche (1b) de la cage (1) lorsque le bras de levier (31) est rabattu sur la cage (1), la branche de la cage (1 b) étant avantageusement souple de manière à être déformée par la zone de contact (34) de la tête de poussée (33).

4. Dispositif de connexion selon l'une quelconque des revendications précédentes, dans lequel l'organe d'écartement (2 ; 2'), avantageusement réalisée de manière monobloc, comprend une partie avant (20 ; 20') formant une bride d'écartement (21 ; 21') qui vient en prise entre les mâchoires (10), une partie arrière (24) en prise avec moyens de sollicitation élastique (5) et une partie centrale (22) formant une fenêtre (23) dans laquelle se déplace la tête de poussée (33) pour venir en prise avec la partie arrière (24) et/ou la branche (1 b).

5. Dispositif de connexion selon l'une quelconque des revendications précédentes, dans lequel la cage (1) comprend une gorge de palier (14) pour des extrémités (41) de l'axe de rotation (4) du levier rotatif (3).

6. Dispositif de connexion selon l'une quelconque des revendications précédentes, dans lequel l'organe d'écartement (2 ; 2') comprend une lame d'écartement (21 ; 21') qui vient en prise avec des surfaces convergentes (11) des mâchoires (10) pour les écarter de manière progressive jusqu'à ce qu'elles viennent en prise serrante avec l'ouverture rétrécie (O) de la gorge (G) du profilé d'accrochage (P2).

7. Dispositif de connexion selon l'une quelconque des revendications précédentes, dans lequel la cage (1) comprend un logement ouvert (17 ; 18) pour la réception d'une broche de blocage (7 ; 8) permettant de fixer le dispositif (D) dans la cavité (C) du profilé récepteur (P1 ; P1'), la broche de blocage (8) traversant avantageusement les deux branches (1 a, 1 b) et l'organe d'écartement ( 2'), la broche de blocage (8) étant avantageusement sollicitée par un ressort (9) pour faire saillie hors d'une des branches (1 a).

8. Profilé récepteur (P1) présentant une cavité interne (C) contenant un dispositif de connexion selon l'une quelconque des revendications précédentes, le profilé récepteur (P1) comprenant une découpe (D) présentant un bord annulaire continu (D1) dans lequel est disposé le bras de levier (3).

9. Profilé récepteur (P1) selon la revendication 8, dans lequel la découpe (D) est globalement allongée, mais forme une extension d'extrémité (D2) présentant une largeur réduite définissant deux bords de palier opposés (D3) sous lesquels des extrémités (41) de l'axe de rotation (4) du levier rotatif (3) sont engagées.

10. Procédé de montage d'un dispositif de connexion selon l'une quelconque des revendications 1 à 7 dans un profilé récepteur (P1) selon la revendication 8 ou 9, comprenant les étapes successives suivantes :
a- retirer le levier rotatif (3) et son axe de rotation (4) de la cage (1),
b- engager la cage (1) dans la cavité (C) du profilé récepteur (P1),
c- mettre en place le levier rotatif (3) avec son axe de rotation (4) dans la cage (1) à travers la découpe (D),
d- déplacer le dispositif de connexion assemblé dans la cavité (C) pour engager des extrémités (41) de l'axe de rotation (4) sous les bords (D3) de la découpe (D), et
e- bloquer la cage (1) dans la cavité (C) du profilé récepteur (P1).
